# EUROPÄISCHE PATENTSCHRIFT

(11) **EP 1 968 078 B1**
(45) Veröffentlichungstag und Bekanntmachung des Hinweises auf die Patenterteilung: **19.05.2010**
(21) Anmeldenummer: 07103513.3
(22) Anmeldetag: 05.03.2007
(51) Int. Cl.: H01F 5/02, G01G 7/02

(54) **Spule eines Kraftmesssystems und Verfahren zu deren Herstellung**
Inductor for a dynamometer system and method for its production
Bobine d'un système de mesure de force et son procédé de fabrication

(43) Veröffentlichungstag der Anmeldung: 10.09.2008
(73) Patentinhaber: Mettler-Toledo AG, 8606 Greifensee (CH)
(72) Erfinder: Baltisberger, Stephan, CH-8625 Gossau (CH); Metzger, Andreas, CH-8708 Männedorf (CH); Koeppel, Thomas, CH-8610 Oetwil am See (CH)

(56) Entgegenhaltungen:
- CH-A5- 679 183
- DE-U1- 8 705 914
- JP-A- 7 298 574
- US-A1- 2004 189 431
- DATABASE WPI Week 198750 15. Mai 1987 (1987-05-15), Derwent Publications Ltd., London, GB; AN 1987-354682 XP002442390 "Weights measuring force compensator - has bifilar opposingly connected coils whose coupling fluxes mutually compensate coils inductive character" & SU 1 310 642 A ((LEKA ) LENGD KALININ POLY) 15. Mai 1987 (1987-05-15)
- FRANTSUZ E T ET AL: "A proposed superconducting magnetic levitation system intended to monitor stability of the unit of mass" METROLOGIA, Bd. 33, 1996, Seiten 189-196, XP002442334 ISSN: 0026-1394

## Beschreibung

Die vorliegende Erfindung betrifft eine elektromagnetische, mehrlagige Spule für ein, auf dem Prinzip der elektromagnetischen Kraftkompensation basierenden Kraftmesssystem und ein Verfahren zu deren Herstellung.

Die elektromagnetische Spule eignet sich für eine, auf dem Prinzip der elektromagnetischen Kraftkompensation basierende Kraftmessvorrichtung, wie sie in der EP 0 990 880 beschrieben ist und welche beispielsweise in der Wägetechnologie ihren Einsatz findet.

In dieser Kraftmessvorrichtung ist eine Vorrichtung zur Kraftübertragung vorhanden, welche eine Parallelführung und häufig ein Hebelwerk zur Untersetzung einer zu übertragenden Kraft, beispielsweise einer Last, aufweist. Ausgangsseitig des Hebelwerks befindet sich die elektromagnetische Spule, welche in einem Magnetfeld beweglich ist und durch welche ein Strom geleitet werden kann.

Die über das Hebelwerk auf die Spule wirkende Kraft bewirkt eine Lageänderung der Spule, welche von einem Positionsgeber, insbesondere einem optischen Lagesensor, festgestellt wird. Daraufhin wird über eine Regelungsschaltung der Stromfluss in der Spule solange verändert, bis die Spule wieder in ihre'ursprüngliche Lage zurückgeführt ist. Somit erzeugt die elektromagnetische Spule eine Gegenkraft, welche der übertragenen Kraft entgegen wirkt und welche als Kompensationskraft bezeichnet wird. Die Stromänderung zur Erzeugung der Kompensationskraft, der sogenannte Kompensationsstrom, ist ein Mass für die mit der Kraftmesszelle zu messende Kraft. Dieses Messprinzip wird als elektromagnetische Kraftkompensation bezeichnet.

Das Magnetfeld wird mittels eines Permanentmagneten mit einem Luftspalt erzeugt, wobei die Spule in das magnetische Feld im Luftspalt eintaucht. Im Falle eines vorhandenen Hebelwerks ist diese Spule bevorzugt am längeren Hebelarm des letzten Hebels befestigt.

Die elektromagnetische Spule besteht aus einer oder mehreren Windungen eines elektrisch leitenden und isolierten Wickeldrahts. Dabei besteht der elektrisch leitende Teil des Wickeldrahts typischerweise aus einem drahtförmigen Metall, beispielsweise einem Kupferdraht oder einem Aluminiumdraht, und der isolierende Teil besteht aus einer Schicht aus Isolationsmaterial, beispielsweise aus Backlack, welches den leitenden Teil ummantelt. Eine elektrische Isolation des Wickeldrahts ist notwendig, um einen elektrischen Kontakt zwischen benachbarten Windungen zu vermeiden. Zudem ist die Spule häufig auf einen Spulenkörper gewickelt, der den Windungen die notwendige Stabilität verleiht. Es gibt jedoch auch so genannte Luftspulen, die durch eine die Windungen miteinander verbindende Klebemasse in ihrer Form gehalten werden.

Kraftmesssysteme mit elektromagnetischer Kraftkompensation haben den Nachteil, dass entsprechend dem jeweils fliessenden Kompensationsstrom die Verlustleistung (Wärmeleistung) der Spule lastabhängig ist. Beim aufeinanderfolgenden Wägen unterschiedlicher Lasten wird also auch stets unterschiedlich viel Verlustwärme frei, die bekanntlich proportional zum Quadrat des Stromes ist. Wie beispielsweise in CA1098552 beschrieben, tritt als eine Folge der ständig wechselnden Temperaturen im System eine unerwünschte Instabilität des Nullpunktes sowie gegebenenfalls der Empfindlichkeit auf.

Besonders störend wird dieser Effekt, wenn Waagen kompakter Bauart, unter anderem mit maximaler Ausnützung des Permanentmagnetsystems, eine grössere Auflösung erhalten sollen. Weisen die Waagen eine Hebelübersetzung auf, so treten Temperaturdifferenzen am Hebel auf, welche die Empfindlichkeit beeinflussen. Um Kraftmesssysteme mit hoher Genauigkeit herzustellen, ist es wünschenswert, die Einflussgrössen der Messung möglichst konstant zu halten.

In der Schrift SU 1 310 642 A wird die Gewichtsmessung mit Kraftkompensation offenbart, wobei eine bifilar gewickelte Spule mit rechteckförmigen Strompulsen betrieben wird.

Als Mechanismus zur Temperaturkompensation ist aus dem Stand der Technik gemäss DE 27 22 093 B1 ein sogenanntes Push-Pull System für die elektromagnetische Kraftkompensation bekannt. Dabei wird die resultierende Kompensationskraft durch einander entgegenwirkende Kraftanteile gebildet, welche die Spule in einem Gleichgewicht halten.

Beispielsweise ist aus der CH 634 654 A5 bekannt, dass die entgegenwirkenden Kraftanteile von der Spule durch eine bifilare Wicklung der Spule erzeugt werden können, indem durch die Wickeldrähte zwei, antiparallel zueinander fliessende elektrische Ströme geleitet werden. Durch geeignete Wahl der Ströme kann dann die Stärke der beiden entgegenwirkenden Kraftanteile so geregelt werden, dass die stossende Kraft (push) und die ziehende Kraft (pull) derart balanciert sind, dass sich die gewünschte Kompensationskraft ergibt.

Dadurch, dass sich die Verlustleistungen der einzelnen, gegenläufigen Ströme zur gesamten Verlustleistung der Spule addieren, werden die belastungsabhängigen Temperaturschwankungen wesentlich reduziert. Ausserdem kann dadurch die Spule bei kleinen Lasten im Bereich der optimalen Linearität betrieben werden.

Meist werden bei der bifilaren Wicklung zwei isolierte Wickeldrähte im Wesentlichen parallel geführt und gleichzeitig zu einer Spule gewickelt. Das hat den Vorteil, dass die beiden Wickeldrähte in nahezu gleicher Anordnung platziert werden können und somit eine gleichmässige Verteilung der Verlustleistung und eine weitgehende Symmetrie der entgegenwirkenden Kraftanteile erreicht werden kann.

Eine weitere Forderung an eine Spule für ein Kraftmesssystem, insbesondere für ein Kraftmesssystem mit hoher Auflösung, besteht darin, eine möglichst hohe Ausnützung des vorhandenen Platzes in Bezug auf die Dimensionierung der Spule zu erzielen. Diese Ausnützung wird mit dem Füllgrad, also dem Verhältnis des Volumens des leitenden Materials, beispielsweise Kupfer, zum maximal zur Verfügung stehenden Platz charakterisiert. Je nach Wicklung der Spule, also der Charakteristik und Anordnung der Windungen, kann der Füllgrad stark differieren.

In dieser Schrift wird die allgemeine Anordnung eines oder mehrerer Wickeldrähte zu einer Spule als Wicklung bezeichnet, während unter einer Windung die physische Umwicklung eines Zentrums mit dem Wickeldraht zu verstehen ist. Dabei ist auch bei kantenförmigen Windungen ein solches Windungszentrum definiert.

Ein wichtiger Faktor zur Optimierung des Füllgrades ist die Dicke der Isolierschicht der Wickeldrähte. Für einen hohen Füllgrad ist eine möglichst dünne Isolierschicht anzustreben, die jedoch genügend isolierend und belastbar sein muss.

Bei Überbelastung der Isolierschicht entstehen Risse und Bruchstellen was zur Bildung von Kriechströmen oder/und Kurzschlüssen zwischen den einzelnen Windungen führen kann. Diese Kriechströme fliessen von einer Windung durch die Stellen mit verminderter Isolationswirkung zur benachbarten Windung sofern zwischen diesen Potentialunterschiede bestehen. Die Kriechströme bilden im Allgemeinen keinen Beitrag zur Erzeugung der Kompensationskraft und führen damit zu einer räumlich ungleichmässigen Ausbildung der Kompensationswirkung und zu einer reduzierten Effizienz der Spule.

Des Weiteren wird der Füllgrad einer Spule durch ungenutzte Zwischenräume reduziert. Diese Zwischenräume treten typischerweise als luftgefüllte Hohlräume zwischen den einzelnen Windungen des Wickeldrahts und gegebenenfalls zwischen den Windungen und der Begrenzung der Spule auf. Je weniger Zwischenräume eine Spule aufweist, desto höher ist im Allgemeinen der Füllgrad.

Es ist bekannt, dass durch eine regelmässige Anordnung der Windungen des Wickeldrahts ein besserer Füllgrad erreicht wird als bei unkontrollierter Anordnung der Windungen. Daher weisen Spulen mit hohem Füllgrad meist eine Lagenstruktur auf, bei der die einzelnen Windungen einer Lage nebeneinander liegend angeordnet sind. Auf diese Weise können die ungenutzten Zwischenräume zwischen den einzelnen Windungen wesentlich reduziert werden.

Beim Wickeln wird zwischen hochkantiger Wicklung (edgewise) und flachkantiger Wicklung (flatwise) unterschieden. Bei einer zylindrischen Spule sind bei einer hochkantigen Wicklung die Windungen in radialer Richtung nebeneinander und die Lagen in axialer Richtung übereinander angeordnet. Umgekehrt liegen bei flachkantiger Wicklung die Windungen in axialer Richtung nebeneinander und die Lagen in radialer Richtung übereinander. Sinngemäss gilt dies auch für nichtzylindrische, beispielsweise viereckige Spulen. Die folgenden Betrachtungen zur Optimierung des Füllgrades beziehen sich jeweils auf beide Arten von Wicklungen.

Neben der Lagenstruktur ist bekannt, dass der Füllgrad einer mehrlagigen Spule durch eine vorteilhafte Anordnung der Windungen in einer Lage weiter optimiert werden kann. Dabei wird angestrebt, die Windungen der oberen Lage möglichst so anzuordnen, dass diese in die Vertiefungen oder Rillen der unteren Lage zu liegen kommen. Die Rillen ergeben sich typischerweise durch die nebeneinander liegenden Windungen der unteren Lage.

Allerdings kann diese bevorzugte Anordnung der Windungen nicht für die gesamte Wicklung der Spule eingehalten werden. So entstehen beim Wickeln der Lagen zwangsläufig Überschneidungen oder Überkreuzungen zwischen den Windungen der unteren Lage und den Windungen der darüberliegenden Lage. Diese Überschneidungen resultieren aus der geometrischen Charakteristik, dass die Windungen der einzelnen Lagen Schraubenlinien bilden, welche pro Lage eine gegenläufige Orientierung aufweisen. Durch die Überschneidungen entstehen zwangsläufig Störstellen, welche zu grösseren Zwischenräumen zwischen den Wickeldrähten der einzelnen Windungen führen und somit den erreichbaren Füllgrad begrenzen.

Es gibt weitere Einschränkungen, die eine Abweichung von der bevorzugten Anordnung der Windungen erfordern. So sind an den Randzone der Spule, also beim Wechseln von einer tiefer liegenden Lage der Windungen zu der darüber liegenden, Unregelmässigkeiten der Anordnung der Windungen nicht zu vermeiden. Diese Unregelmässigkeiten sind jedoch typischerweise von untergeordneter Bedeutung und werden in der folgenden Beschreibung ausser Betracht gelassen.

Bei den oben genannten Überschneidungen wechseln die Wickeldrähte der oberen Lage ihre Position von einer Vertiefung der unteren Lage zur nächsten. Dadurch ergeben sich an diesen Stellen enge Biegeradien und eine entsprechend hohe lokale Belastungen der Isolationsschicht. Insbesondere ist bei der Herstellung der Spule darauf zu achten, dass diese Übergänge so präzise geführt sind, dass weder unnötige Zwischenräume noch übermässige Belastungen der Isolationsschicht durch enge Biegeradien und Scherkräfte entstehen.

Für Spulen mit hohem Füllgrad ist einerseits zu vermieden, dass bei deren Herstellung hohe Belastungen der Isolierschicht auftreten. Andererseits müssen, um eine satte Wicklung zu erreichen, die Windungen mit einer gewissen, nicht zu kleinen Zugspannung aufgebracht werden. Daher werden typischerweise sehr aufwendige Mechanismen zur Regelung der Zugspannung und zur Steuerung des Vorschubs und der Drahtführung während des Wickelprozesses eingesetzt.

Bei der Herstellung von Spulen mit hohem Füllgrad und mit multifilaren oder bifilaren Wicklungen tritt die Problematik der Zwischenräume und der Belastung der Isolationsschicht in verstärktem Mass auf. In diesem Fall überschneiden pro Windung zwei oder mehrere Wickeldrähte der oberen Lage zwei oder mehrere Wickeldrähte der unteren Lage. Dadurch entstehen mehr Überkreuzungen und zusätzlich zu den kleineren Biegeradien, vermehrt lokale Kontaktpunkte zwischen den Windungen der oberen und unteren Lage und damit eine entsprechend höhere Belastung der

Isolierschicht.

Spulen mit multifilarer oder bifilarer Wicklung sind also durch die grössere Anzahl von Zwischenräumen, die grösseren Potentialdifferenzen der Windungen und die grösseren Belastungen der Isolationsschicht empfindlicher bezüglich Kriechströme als monofilare Spulen.

Bei Spulen mit multifilaren oder bifilaren Wicklung ist der Füllgrad durch die grössere Anzahl von Störstellen und den damit verbundenen unbrauchbaren Zwischenräumen gegenüber einer monofilaren Wicklung reduziert. Ferner können Lebensdauer und/oder Wirkungsgrad der Spule durch eine höhere Belastung der Isolationsschicht beeinträchtigt sein. Zudem ist das Herstellungsverfahren durch die Manipulation von mehreren Wickeldrähten komplexer als bei einer einfach gewickelten Spule.

Der vorliegenden Erfindung liegt daher die Aufgabe zugrunde, eine mehrlagige elektromagnetische Spule aufweisend eine multifilare, insbesondere bifilare Wicklung von Wickeldrähten, mit einem verbesserten Füllgrad für ein, auf dem Prinzip der elektromagnetischen Kraftkompensation basierendes Kraftmesssystem anzugeben. Dabei sollen die Struktur der Spule und deren Herstellverfahren so beschaffen sein, dass keine übermässigen Belastungen der Isolierschicht auftreten. Ausserdem soll ein einfaches Verfahren zur Herstellung einer solchen Spule angegeben werden.

Diese Aufgabe wird mit einer elektromagnetischen Spule und einem Herstellverfahren gelöst, welche die im unabhängigen Vorrichtungsanspruch im und unabhängigen Verfahrensanspruch angegebenen Merkmale aufweisen. Vorteilhafte Ausgestaltungen der Erfindung sind in weiteren Ansprüchen angegeben.

Bei der erfindungsgemässen, elektromagnetischen und mehrlagigen Spule eines, auf dem Prinzip der elektromagnetischen Kraftkompensation basierenden Kraftmesssystems, welche eine multifilare, insbesondere eine bifilare Wicklung von Wickeldrähten enthält, weisen die Wickeldrähte eine, im Wesentlichen rechteckförmige Querschnittsfläche auf.

Diese Lösung hat den Vorteil, dass durch die annähernd rechteckförmige Form der Querschnittsfläche bei multifilaren und bifilaren Wicklungen ein hoher Füllgrad erreicht werden kann. Da die Windungen in einer oberen Lage weitgehend unbeeinflusst von der Anordnung der Windungen in der unteren Lage angeordnet werden können, entstehen, ausser in den vernachlässigbaren Randzonen einer Spule, keine Störstellen. Auch bei den mehrfachen Überkreuzungen, wie sie sich bei multifilaren und bifilaren Wicklungen besonders stark auswirken, wird der zur Verfügung stehende Raum wirkungsvoll genutzt und damit der Füllgrad erhöht.

Als weiterer Vorteil führt die Vermeidung von Zwischenräumen zu einer Verbesserung bezüglich der Abhängigkeit des Messsystems von Umwelteinflüssen. So dringt unter entsprechenden Bedingungen beispielsweise hohe Raumfeuchte, Feuchtigkeit der Umgebungsluft in die Zwischenräume der Spule ein. Das führt einerseits zu einer zeitlichen Gewichtsänderung der Spule und damit zu einer Nullpunkt-Drift. Andererseits wird durch die Feuchtigkeit die Entstehung von Kriechströmen begünstigt was zu entsprechenden Änderungen der Kompensationskraft führt.

Die Problematik der Kriechströme besteht in besonderem Mass bei multifilaren und bifilar gewickelten Spulen, da durch die entgegen gerichteten, antiparallel fliessenden, elektrischen Ströme besonders grosse Potentialdifferenzen zwischen benachbarten Windungen auftreten. Somit wirken die Feuchtigkeit in den Zwischenräumen und die grossen Potentialdifferenzen in ungünstiger Weise. Eine Verminderung der Zwischenräume ist daher bei multifilaren und bifilar gewickelten Spulen besonders vorteilhaft.

Des Weiteren ergibt der rechteckförmige Querschnitt der Wickeldrähte grosse Vorteile bezüglich der Belastung der Isolationsschicht. Da bei Wickeldrähten mit im Wesentlichen reckteckförmigem Querschnitt die Berührungen zwischen den Windungen der einzelnen Lagen hauptsächlich flächenförmig auftreten, können, ausser in den weitgehend vernachlässigbaren Randzonen einer Spule, keine übermässigen, lokalen Belastungen der Isolierschicht auftreten. Das Entstehen von Schäden mit der oben beschriebenen Beeinträchtigung der Langzeitstabilität und der Effizienz der Spule wird dadurch wirkungsvoll verhindert.

Die Herstellung der Spule ist bei Wickeldrähten mit im Wesentlichen reckteckförmigem Querschnitt wesentlich vereinfacht. Da die Windungen einer oberen Lage weitgehend unbeeinflusst von der Anordnung der Windungen in der unteren Lage angeordnet werden können, entstehen, ausser in den vernachlässigbaren Randzonen einer Spule, keine komplexen Wechsel der Rillen, damit keine aufwendigen Steuer- und Regelmechanismen. Abgesehen von den Randzonen kann daher wie bei einer einlagigen Spule gewickelt werden.

Eine vorteilhafte Ausgestaltung der Querschnittsfläche der Wickeldrähte ist eine, im Wesentlichen abgerundet rechteckige Form. Diese Form hat den Vorteil, dass eine ungleichmässige Schichtdicke der Isolationsschicht im Kantenbereich vermieden werden kann. Solche Formen können durchaus aus einem beliebig geformten Ausgangsmaterial durch ziehen durch eine Ziehmatrize oder aus einem runden Wickeldraht mittels geeigneter Verfahren wie Walzen oder Pressen hergestellt werden. Ausserdem werden durch die abgerundete Form Schäden an der Isolationsschicht während der Herstellung der Spule vermieden. Insbesondere werden Scherkräfte zwischen benachbarten Windungen vermieden oder zumindest reduziert.

Sind die kürzeren Seiten des Querschnitts des Wickeldrahts bikonvex geformt ergibt sich, ähnlich wie bei der abgerundet rechteckige Form, eine vereinfachte Herstellung der Spule. Ebenso können durch eine abgeflachte Form der längeren Seiten sehr gleichmässige, kompakte Lagen von Windungen hergestellt werden.

Weist die rechteckförmige Form des Querschnitts der Wickeldrähte ein Länge/Breite-Verhältnis von mehr als 1.2, insbesondere mehr als 1.5 auf, so kann die Spule ohne aufwendige Führungsmechanismen hergestellt werden. Andernfalls besteht die Gefahr, dass sich der Wickeldraht während des Wickelns in Längsrichtung verdrillt und somit in der Wicklung grössere Störstellen mit starken Belastungen der Isolationsschicht entstehen.

Die Wickeldrähte können auch so angeordnet werden, dass jeder der Wickeldrähte jeweils eine, im Wesentlichen in sich vollständige Lage der Spule bilden. Abgesehen von unvermeidbaren Fehlern an den Randzonen kann dadurch eine sehr regelmässige, geschichtete Struktur der Lagen erzeugt werden.

In einer vorteilhaften Ausgestaltung der Erfindung sind die Wickeldrähte der multifilaren Wicklung, insbesondere der bifilaren Wicklung zu einer Drahtkombination zusammengefasst. Das bietet den Vorteil, dass damit eine bessere Homogenität und Gleichwertigkeit der erzeugten Kompensationskraft realisiert werden kann.

Insbesondere sind dadurch die beiden entgegenwirkenden Kraftanteile in einem Push-Pull System symmetrisch aufeinander abgestimmt. Ferner wird das Herstellungsverfahren vereinfacht, da die zusammengefassten Wickeldrähte auf einfache Weise verarbeitet werden können.

Die Drahtkombination kann dadurch gebildet werden, dass die längeren Seiten der rechteckförmigen Querschnittsflächen der Wickeldrähte benachbart angeordnet sind. Auf diese Weise kann dann beispielsweise durch einfaches Übereinanderlegen von vorgefertigten, abgeflachten Wickeldrähten eine kompakte und stabile Drahtkombination erreicht werden.

Andererseits kann die Drahtkombination auch durch benachbartes Anordnen der kürzeren Seiten der rechteckförmigen Querschnittsflächen der Wickeldrähte gebildet werden. Das ermöglicht eine einfache Herstellung der Drahtkombination ohne grosse Verformungsprozesse aus runden oder quadratischen Wickeldrähten. Zudem ergeben sich dann nur kleine Belastungen der Isolationsschicht.

Eine Ausgestaltung der erfindungsgemässen Spule besteht darin, dass die Wickeldrähte zu einer Drahtkombination zusammengefügt, insbesondere zusammengeklebt sind. Dadurch können Abweichungen von der optimalen, parallelen Anordnung weitgehend vermieden werden. Diese Abweichungen können beispielsweise bei der Herstellung der Spule, insbesondere an den Randzonen entstehen.

Das Zusammenkleben kann auf unterschiedliche Arten erreicht werden, beispielsweise indem das Isolationsmaterial unter Druck und/oder Wärme eine Klebewirkung entfaltet, oder indem die Isolationsschicht oder eine zusätzliche Mantelschicht des Wickeldrahts unter Einwirkung eines Lösungsmittels ein Verkleben und/oder ein Verschweissen der Mantelschichten erzeugt, oder durch das Einbringen eines zusätzliches Klebemittel zwischen die Wickeldrähte. '

Die Vorteile, die sich aus der Formgebung der einzelnen Wickeldrähte ergeben, können in analoger Weise auch für die Drahtkombination realisiert werden, indem die Querschnittsfläche dieser Drahtkombination eine im Wesentlichen, gegebenenfalls abgerundete, rechteckförmige Form aufweist, deren Länge/Breite-Verhältnis mehr als 1.2, insbesondere mehr als 1.5 beträgt, und/oder deren kürzere Seiten bikonvex oder doppelt bikonvex geformt und/oder deren längere Seiten abgeflacht sind.

In einer weiteren Ausgestaltung der Anordnung der Wickeldrähte in einer, durch die Windungen der Drahtkombination gebildeten Lage, ist ein erster Wickeldraht der Drahtkombination stets näher zum Zentrum der Windung angeordnet. Auf diese Weise ergibt sich eine ausgeprägte Lagenstruktur in der Spule und damit ein hoher Füllgrad, auch bei eventuell vorhandenen Differenzen in der Form der beiden Wickeldrähte. Insbesondere kann dann eine gleichmässige Struktur erreicht werden, falls die beschriebene Anordnung der Wickeldrähte bei jeder Lage angewendet wird.

Eine weitere, vorteilhafte Ausgestaltung besteht in der Anordnung einer zwei Wickeldrähte aufweisenden Drahtkombination indem, alternierend pro Lage, in der ersten Lage der erste Wickeldraht und in der folgenden Lage der zweite Wickeldraht näher zum Zentrum der Windung angeordnet ist. Dadurch können Asymmetrien in der Anordnung der beiden Wicklungen vermieden werden.

In weiteren Ausgestaltungsformen kann die Spule als Luftspule, insbesondere in zylindrischer Form und insbesondere mit mindestens acht Lagen ausgeführt sein. Die Vorteile der erfindungsgemässen Form der Wickeldrähte treten umso stärker hervor, je mehr Lagen eine Spule aufweist. Während sich bei der bekannten Form der Wickeldrähte die Störungsstellen von Lage zu Lage fortsetzen, sind bei der erfindungsgemässen Form der Wickeldrähte die jeweiligen Lagen und damit die Störungsstellen weitgehend unabhängig voneinander.

Vorzugsweise wird die erfindungsgemässe Spule mittels eines Verfahrens hergestellt, bei dem die Wickeldrähte und/oder die Drahtkombination jeweils durch Druck und/oder Erhitzung, gegebenenfalls unmittelbar vor dem Wickeln, geformt werden. Dadurch wird eine präzise Formgestaltung erreicht.

Die, gegebenenfalls rechteckförmig vorgefertigten, Wickeldrähte können auch von mehreren Trommeln abgewickelt werden, deren Achsen im Wesentlichen parallel zur Achse der Windungen der herzustellenden Spule verlaufen. Dadurch wird ein Verdrillen der Wickeldrähte und/oder der Drahtkombination vermieden.

Ferner können in einem Verfahrensschritt die Wickeldrähte zu einer Drahtkombination zusammengefügt und auf eine Trommel gewickelt werden. Vorzugsweise verläuft dabei deren Achse im Wesentlichen parallel zur Achse der Windungen der herzustellenden Spule. Durch diese Anordnung wird ein Verdrillen der Drahtkombination beim Zwischenspeichern vermieden.

Vorzugsweise wird beim Wickeln der Spule die Zugkraft der Wickeldrähte und/oder der Drahtkombination auf die herzustellende Spule gemäss vorgegebenen Werten geregelt. Dadurch wird eine satte Wicklung bei geringer Belastung der Isolierschicht erreicht.

Einzelheiten des erfindungsgemässen Verfahrens und der erfindungsgemässen Vorrichtung ergeben sich anhand der Beschreibung der in den stark schematisierten Zeichnungen dargestellten Ausführungsbeispiele. Es zeigen:
- Figur 1: eine Prinzipzeichnung einer auf dem Prinzip der elektromagnetischen Kraftkompensation basierenden Kraftmesszelle im Schnitt;
- Figur 2: eine Spule gemäss dem Stand der Technik, wie sie bevorzugt in Kraftmesszellen gemäss Figur 1 Einsatz findet, 2a) in perspektivischer Darstellung, angeordnet auf einem Spulenkörper; 2b) in perspektivischer Darstellung, ausgeführt als Luftspule; 2c) in einem Schnitt entlang der Linie I - I der Figur 2a);
- Figur 3: ein Schnittbild einer bifilar gewickelten Spule entsprechend Figur 2c) mit erfindungsgemäss geformten Wickeldrähten in verschiedenen Anordnungen, 3a) parallel gewickelt, 3b) in Lagenstruktur, 3c) paarweise zusammengefasst;
- Figur 4: ein Schnittbild mit unterschiedlichen Formen der Drahtkombination, mit im Wesentlichen, 4a) rechteckiger Form der einzelnen Wickeldrähte mit längsseitig zusammengefügten Querschnittflächen, 4b) entsprechend Figur 4a) mit gerundet rechteckiger Form der einzelnen Wickeldrähte und einem Länge/Breite-Verhältnis der Drahtkombination von mehr als 1.5, 4c) entsprechend Figur 4a) mit bikonvex geformten kürzeren Seiten und abgeflachten längeren Seiten; 4d) mit rechteckiger Form der einzelnen Wickeldrähte mit kurzseitig zusammengefügten Querschnittflächen;
- Figur 5: ein Ausschnitt des Schnittbildes gemäss Figur 3a) mit weiteren erfindungsgemässen Anordnungen der Drahtkombination, 5a) mit Lagenstruktur, 5b) mit gleichgerichteter Lagenstruktur, 5c) mit alternierend wechselnder Lagenstruktur;
- Figur 6: eine Prinzipzeichnung einer Vorrichtung zum Zusammenfügen der Wickeldrähte und zur Formgestaltung der Drahtkombination;
- Figur 7: eine Prinzipzeichnung zur Herstellung der Spule und Einspeisung der Wickeldrähte durch Abwicklung von Trommeln mit 7a) vertikal ausgerichteten Trommelachsen, mit Formwalzen zur Formung der Drahtkombination, mit Vorrichtung zur Zwischenlagerung der Drahtkombination und einer Vorrichtung zur Regelung der Zugspannung, 7b) horizontal ausgerichteten Trommelachsen mit Formwalzen zur Formung der einzelnen Wickeldrähte.

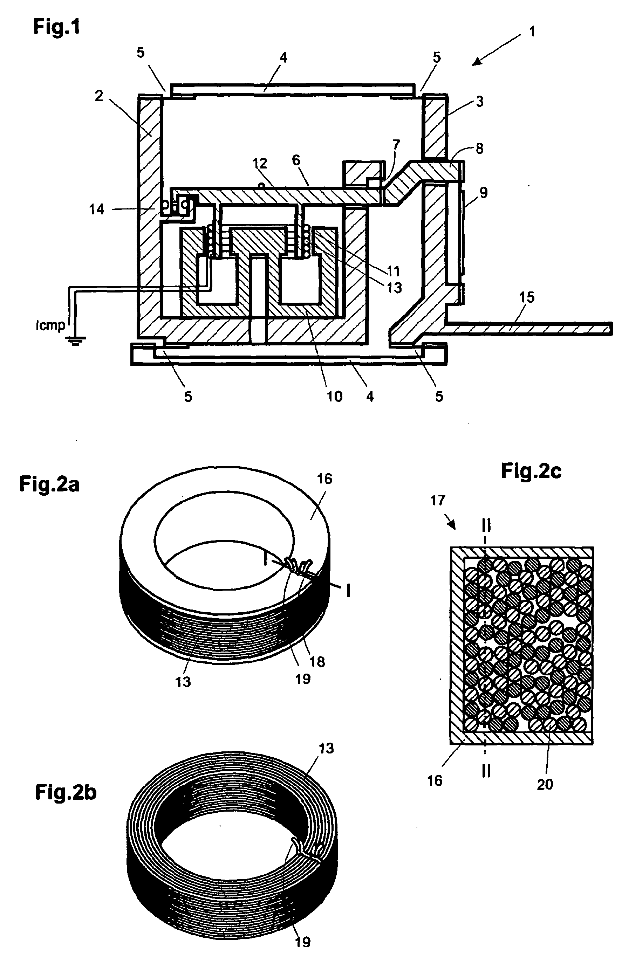

Figur 1 zeigt stark schematisiert eine für eine Verwendung in der Wägetechnologie geeignete Kraftmesszelle 1, die auf dem Prinzip der elektromagnetischen Kraftkompensation basiert. Die Kraftmesszelle 1 weist eine Vorrichtung zur Kraftübertragung mit einer Parallelführung mit einem feststehenden Bereich 2 und einem vertikal auslenkbaren Bereich 3, welche jeweils an den Enden eines Paars von Lenkern 4 über Biegelager 5 angelenkt sind, auf. Der vertikal auslenkbare Bereich 3 weist einen zur Aufnahme einer zu messenden Last dienenden Ausleger 15 auf. Die Normalkomponente der von einer Last bewirkten Kraft wird vom vertikal auslenkbaren Bereich 3 durch ein Koppelelement 9 auf den kurzen Hebelarm 8 des Hebels 6 übertragen. Der Hebel 6 ist mittels eines Biegelagers 7 an einem Teil des feststehenden Bereichs 2 abgestützt. Die Kraftmesszelle weist ferner ein topfförmiges Permanentmagnetsystem 10, das in fester Verbindung mit dem feststehenden Teil 2 angeordnet ist, und über einen Luftspalt 11 verfügt, auf. Im Luftspalt 11 ist eine mit dem längeren Hebelarm 12 des Hebels 6 verbundene Spule 13 angeordnet. Die Spule 13 wird von einem Kompensationsstrom lcmp durchflossen, dessen Grösse von der auf den Hebel 6 einwirkenden Kraft abhängt. Die Lage des Hebels 6 wird von einer opto-elektrischen Messvorrichtung 14 gemessen, die mit einer Regeleinrichtung verbunden ist, welche den Kompensationsstrom lcmp in Abhängigkeit der zugeführten Messsignale derart regelt, dass der Hebel 6 stets in gleicher Lage gehalten oder nach einer Laständerung in diese wieder zurückgeführt wird.

In der Figur 2a) ist eine Spule 13, wie sie bevorzugt in Kraftmesszellen 1 gemäss Figur 1 Einsatz findet, gemäss dem Stand der Technik gezeigt. Die Spule 13 ist auf einem toroid-förmigen Spulenkörper 16 angeordnet, lediglich die Öffnung 18 für den Durchtritt der Zuleitungen 19 zur Spule 13 ist von der Kapselung ausgenommen. Ein solcher Spulenkörper 16 besteht bevorzugt aus einem unmagnetischen Material, wie beispielsweise Kunststoff, Kupfer oder Aluminium.

Eine weitere Ausgestaltung, in Form einer Luftspule, ist in Figur 2b) dargestellt. In diesem Fall weist die Spule 13 keinen stützenden Spulenkörper 16 auf sondern die Windungen der Spule werden durch eine verbindende Klebemasse in ihrer Form gehalten.

Figur 2c) zeigt in einer Schnittzeichnung durch die Spulenanordnung 17 entlang der Linie I - I mit einer bifilaren Wicklung von Wickeldrähten, wie sie gemäss dem Stand der Technik verwendet wird. Die Windungen 20 bilden einzelne, übereinander liegende Lagen. Die Anordnung einer Lage ist durch die gestrichelte Linie II - II beispielhaft dargestellt. Die grösseren Zwischenräume zwischen den Windungen 20 entstehen durch Unregelmässigkeiten der Windungen 20, insbesondere bei Überschneidungen der Windungen 20 und an den Randzonen des Spulenkörpers 16.

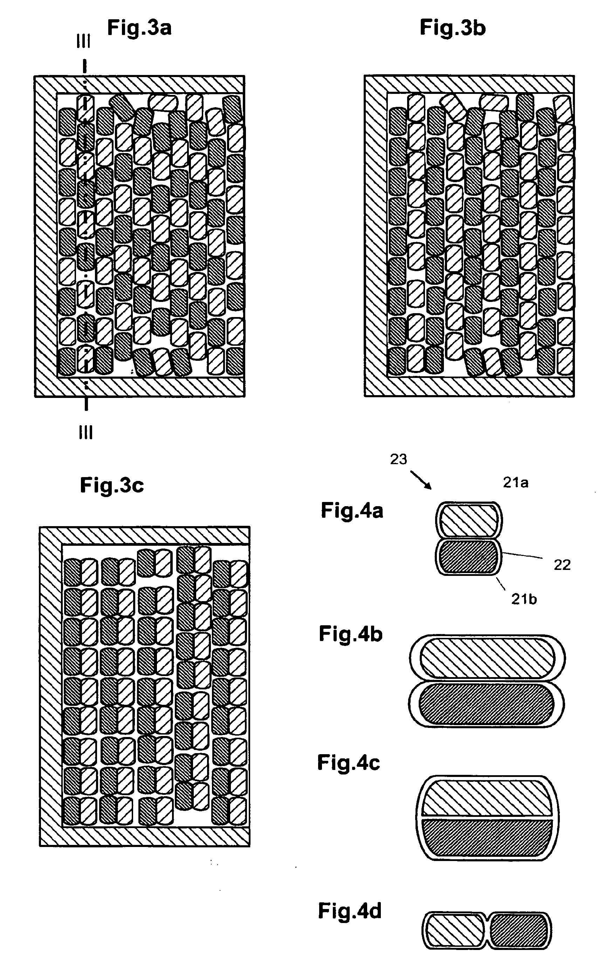

In der Figur 3 ist ein Schnittbild einer Spule 13 mit einer bifilaren Wicklung der erfindungsgemäss geformten Wickeldrähte dargestellt. Typischerweise werden die im Wesentlichen rechteckig geformten Wickeldrähte 21 a und 21 b, nebeneinander liegend, Lage für Lage aufgewickelt. Die weit schraffierten Flächen stellen den ersten Wickeldraht 21 a dar, die dicht schraffierten Flächen bezeichnen den zweiten Wickeldraht 21 b. Ausser an den Randzonen können auf diese Weise sehr gleichmässige Lagenstrukturen, dargestellt als gestrichelte Linie III - III, erreicht werden. Die Isolationsschicht 22, die jeden der Wickeldrähte ummantelt, ist nicht dargestellt. Gemäss Figur 3a) werden die Wickeldrähte während des Wickelns nebeneinander geführt, das heisst so, dass die kürzeren Seiten der rechteckförmigen Querschnittsfläche einander zugewandt sind. In Figur 3b) ist eine Anordnung dargestellt, bei der die Wickeldrähte während des Wickelns so geführt werden, dass jeder der Wickeldrähte im Wesentlichen eine vollständige Lage der Spule bildet.

Figur 4a) zeigt ein Schnittbild einer Drahtkombination wie sie in Figur 3c) verwendet wird. Die Wickeldrähte 21 a und 21 b weisen eine im Wesentlichen rechteckigen Form auf und sind zu einer Drahtkombination 23 zusammengefasst. Dabei werden die Wickeldrähte während des Wickelns übereinander geführt, derart, dass die längeren Seiten der rechteckförmigen Querschnittsfläche aufeinander liegen. Die Wickeldrähte sind einzeln mit einer Isolationsschicht 22 ummantelt. Für den Fall, dass die Wickeldrähte permanent zusammengefügt werden sollen, könnte die Isolationsschicht 22 selbst oder auch ein weiteres Klebemittel die Funktion des Verbindungsmittels übernehmen.

Eine analoge Situation zu 4a) ist in Figur 4b) dargestellt, jedoch mit einer im Wesentlichen gerundet rechteckigen Form der einzelnen Wickeldrähte und einem Länge/Breite-Verhältnis der Drahtkombination von mehr als 1.5.

Entsprechend Figur 4a) zeigt Figur 4c) eine im Wesentlichen rechteckige Form der Drahtkombination mit bikonvex geformten, kürzeren Seiten und abgeflachten, längeren Seiten.

Eine analoge Situation zu 4a) ist in Figur 4d) dargestellt, die einzelnen Wickeldrähte sind jedoch an den kürzeren Seiten der rechteckförmigen Querschnittflächen zu einer Drahtkombination zusammengefügt.

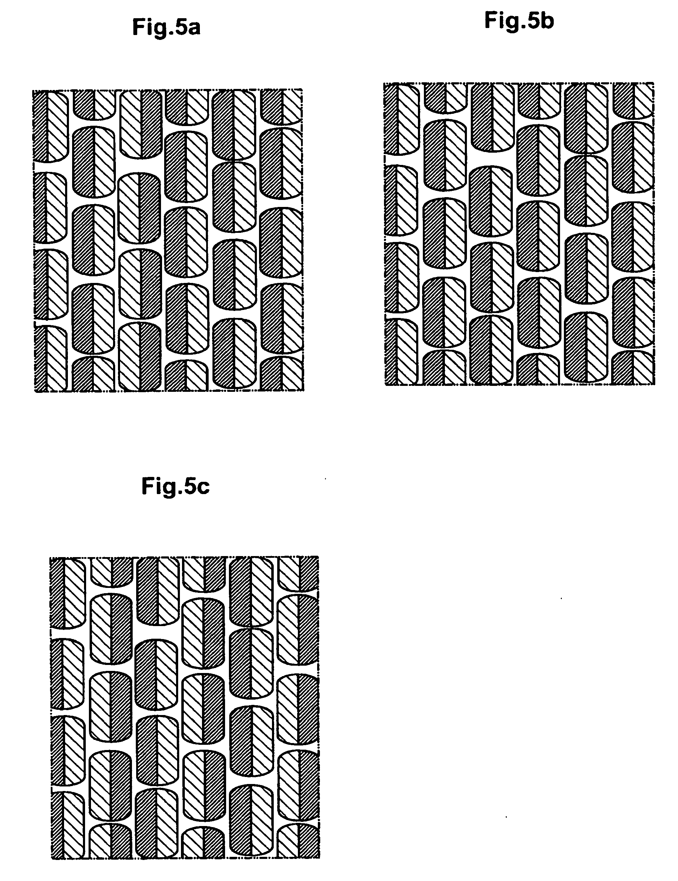

Figur 5a) zeigt einen Ausschnitt aus der Querschnittsfläche analog zu Situation 3a), bei der jedoch die Wickeldrähte 21 a und 21 b zu einer Drahtkombination 23 gemäss Figur 4c) zusammengefasst sind. Dabei ist die ummantelnde Isolierschicht 22 nicht dargestellt. Bei dieser Anordnung ist jeweils in einer Lage einer der Wickeldrähte 21 a oder 21 b stets näher zum Zentrum der Windung angeordnet, sodass sich eine ausgeprägte Lagenstruktur ergibt.

In Figur 5b) die eine Anordnung wie in Figur 5a) dargestellt, doch bildet hier einer der beiden Wickeldrähte 21 a oder 21 b in allen Lagen die näher zum Zentrum angeordneten Windungen.

Figur 5c) entspricht Figur 5a), hier bildet jedoch, alternierend wechselnd von Lage zu Lage, der Wickeldraht 21 a oder 21 b die näher zum Zentrum angeordneten Windungen.

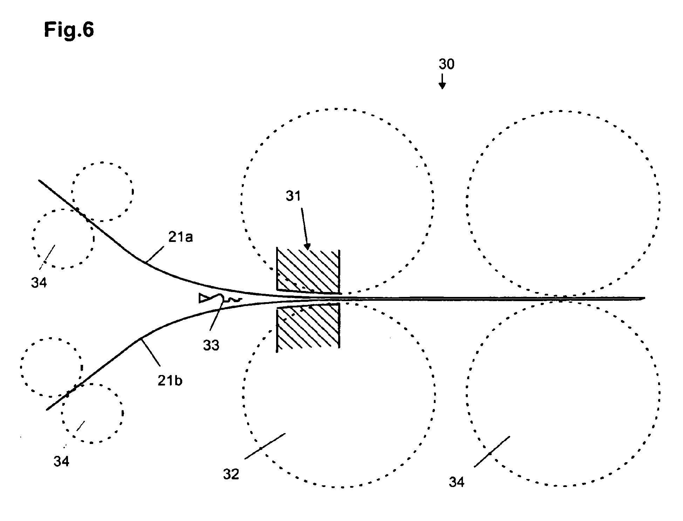

Die Figur 6 zeigt stark schematisiert eine Herstellvorrichtung für eine Drahtkombination 30, mit der die zwei Wickeldrähte 21 a und 21 b zusammengefügt werden können. Das Kombinieren kann durch eine mechanische Führung 31 kontrolliert werden, die vereinfacht im Schnittbild dargestellt ist. Die Herstellvorrichtung für eine Drahtkombination kann aber auch, wie gestrichelt dargestellt, in der Form von Walzen 32 ausgeführt sein. Ein Verbindungsmittel 33 kann unmittelbar vor dem Zusammenfügen der beiden Wickeldrähte 21a und 21b zwischen die Wickeldrähte eingebracht werden. Es kann aber auch ein Lösungsmittel zum Anlösen der Isolierschicht der Wickeldrähte oder einer speziellen, die Wickeldrähte ummantelnde Klebeschicht eingebracht werden. Im Anschluss an das Kombinieren ist eine Vorrichtung 34, wie beispielsweise zwei gegenläufige Walzen, angeordnet, mit denen die Querschnittsfläche der Drahtkombination 23 geformt werden kann. Diese Vorrichtung 34 kann aber auch in die mechanische Führung 31 oder die Walzen 32 integriert sein. Die einzelnen Wickeldrähte 21 a und 21b können mit Hilfe der Formwalzen 34 teilweise oder vollständig vorgeformt werden. Dieses Formen kann unmittelbar vor dem Zusammenfügen durchgeführt werden, es kann aber auch in die Prozesse der Herstellvorrichtung für die Drahtkombination 30 integriert sein.

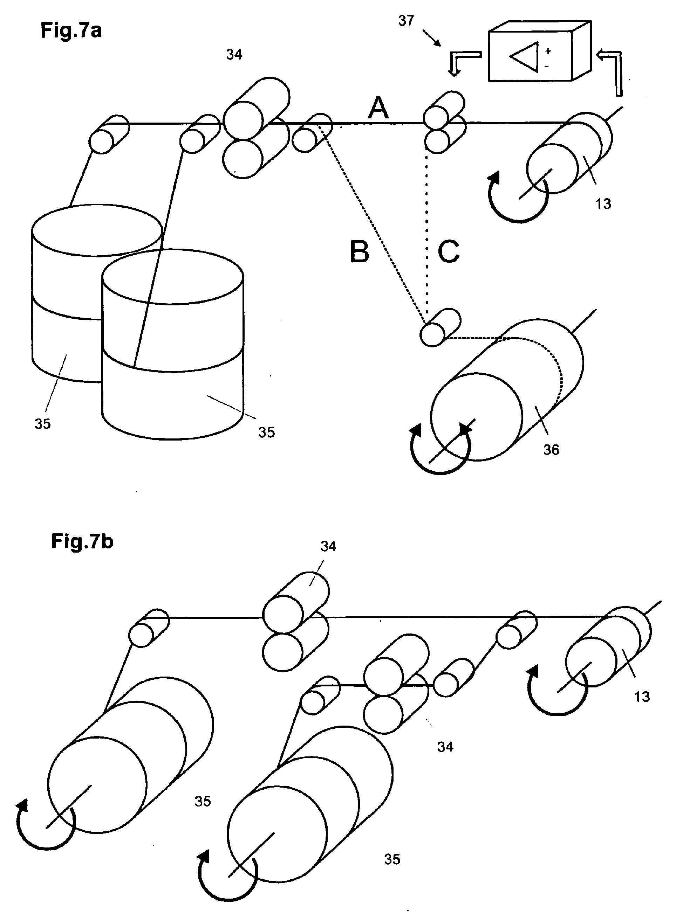

Eine stark schematisierte Vorrichtung zur Herstellung der Spule ist in Figur 7a) dargestellt. Dabei werden die Wickeldrähte von vertikal stehenden Trommeln 35 entnommen und über eine Herstellvorrichtung für eine Drahtkombination 30 entweder gemäss A) auf die herzustellende Spule 13 oder B) auf die horizontal ausgerichtete, drehbar gelagerte Trommel 36 gewickelt. Nach einer Zwischenlagerung auf der Trommel 36 kann dann zu gegebener Zeit die Drahtkombination 23 gemäss C) auf die herzustellende Spule 13 gewickelt werden. Die Zugkraft, die beim Bewickeln auf die herzustellende Spule 13 wirkt, kann durch eine Regelvorrichtung 37 auf einen vorgegebenen Wert geregelt werden.

Bei der Anordnung gemäss Figur 7b) sind die Achsen der Trommeln 35 horizontal ausgerichtet und liegen somit parallel zu der Achse der herzustellenden Spule 13.
Dadurch können teilweise oder vollständig vorgefertigte rechteckförmige Wickeldrähte ohne Verdrillen auf die Spule 13 aufgebracht werden. Zudem können die einzelnen Wickeldrähte durch Formwalzen 34 teilweise oder vollständig geformt und oder nachgeformt werden. In diesem Fall werden die Wickeldrähte ohne Druck, Erhitzung oder Klebemittel, direkt zusammengelegt und auf die Spule 13 aufgewickelt.

### Bezugszeichenliste

| | |
|---|---|
| 1 | Kraftmesszelle |
| 2 | Feststehender Bereich |
| 3 | vertikal auslenkbarer Bereich |
| 4 | Lenker |
| 5 | Biegelager |
| 6 | Hebel |
| 7 | Biegelager zur Abstützung des Hebels |
| 8 | kurzer Hebelarm |
| 9 | Koppelelement |
| 10 | Permanentmagnetsystem |
| 11 | Luftspalt |
| 12 | längerer Hebelarm |
| 13 | Spule |
| 14 | Opto-elektronische Messvorrichtung |
| 16 | Spulenkörper |
| 17 | Spulenanordnung |
| 18 | Öffnung |
| 19 | Zuleitungen zur Spule |
| 20 | Windungen |
| 21a, 21b | Wickeldraht |
| 22 | Isolationsschicht |
| 23 | Drahtkombination |
| 30 | Herstellvorrichtung für Drahtkombination |
| 31 | Führungsvorrichtung |
| 32 | Walzen zum Zusammenfügen |
| 33 | Verbindungsmittel |
| 34 | Formwalze |
| 35 | Trommel zur Drahtzuführung |
| 36 | Trommel zur Zwischenlagerung |
| 37 | Regelvorrichtung |

## Patentansprüche

1. Elektromagnetische, mehrlagige Spule eines, auf dem Prinzip der elektromagnetischen Kraftkompensation basierenden Kraftmesssystems, aufweisend eine multifilare, insbesondere eine bifilare Wicklung von Wickeldrähten, **dadurch gekennzeichnet, dass** die Wickeldrähte eine, im Wesentlichen rechteckförmige Querschnittsfläche aufweisen.

2. Spule nach Anspruch 1, **dadurch gekennzeichnet, dass** die Querschnittsfläche der Wickeldrähte eine, im Wesentlichen abgerundet rechteckige Form aufweist, deren kürzere Seiten bikonvex geformt und/oder deren längere Seiten abgeflacht sind.

3. Spule nach Anspruch 1 oder 2, **dadurch gekennzeichnet, dass** die Querschnittsfläche der Wickeldrähte ein Länge/Breite-Verhältnis von mehr als 1.2, insbesondere mehr als 1.5, aufweist.

4. Spule nach einem der Ansprüche 1 bis 3, **dadurch gekennzeichnet, dass** im Wesentlichen jeder der Wickeldrähte eine jeweils in sich vollständige Lage der Spule bildet.

5. Spule nach einem der Ansprüche 1 bis 4, **dadurch gekennzeichnet, dass** die Wickeldrähte zu einer Drahtkombination zusammengefasst sind, insbesondere durch benachbarte Anordnung der längeren oder kürzeren Seiten der jeweiligen rechteckförmigen Querschnittsflächen.

6. Spule nach Anspruch 5, **dadurch gekennzeichnet, dass** die Wickeldrähte zu einer Drahtkombination zusammengefügt, insbesondere zusammengeklebt sind.

7. Spule nach Anspruch 5 oder 6, **dadurch gekennzeichnet, dass** die Querschnittsfläche der Drahtkombination eine im Wesentlichen abgerundete rechteckförmige Form aufweist, deren kürzere Seiten bikonvex oder doppelt bikonvex geformt und/oder deren längere Seiten abgeflacht sind.

8. Spule nach einem der Ansprüche 5 bis 7, **dadurch gekennzeichnet, dass** die Querschnittsfläche der Drahtkombination ein Länge/Breite-Verhältnis von mehr als 1.2, insbesondere mehr als 1.5, aufweist.

9. Spule nach einem der Ansprüche 5 bis 8, **dadurch gekennzeichnet, dass** in einer, durch die Windungen der Drahtkombination gebildeten Lage, insbesondere in jeder dieser Lagen, ein erster Wickeldraht der Drahtkombination stets näher zum Zentrum der Windung angeordnet ist.

10. Spule nach einem der Ansprüche 5 bis 7, **dadurch gekennzeichnet, dass** die Drahtkombination zwei Wickeldrähte aufweist und alternierend pro Lage der erste Wickeldraht und in der folgenden Lage der zweite Wickeldraht näher zum Zentrum der Windung angeordnet ist.

11. Spule nach einem der Ansprüche 1 bis 10, **dadurch gekennzeichnet, dass** die Spule als Luftspule, insbesondere in zylindrischer Form und insbesondere mit mindestens acht Lagen ausgeführt ist.

12. Verfahren zur Herstellung einer Spule gemäss einem der Ansprüche 1 bis 11, **dadurch gekennzeichnet, dass** die Wickeldrähte und/oder die Drahtkombination jeweils durch Druck und/oder Erhitzung, gegebenenfalls unmittelbar vor dem Wickeln, geformt werden.

13. Verfahren nach Anspruch 12, **dadurch gekennzeichnet, dass** die, gegebenenfalls rechteckförmig vorgefertigten, Wickeldrähte von mehreren Trommeln abgewickelt werden, deren Achsen im Wesentlichen parallel zur Achse der Windungen der herzustellenden Spule angeordnet sind.

14. Verfahren nach Anspruch 12 oder 13, **dadurch gekennzeichnet, dass** die Wickeldrähte zu einer Drahtkombination zusammengebracht werden und dass diese Drahtkombination anschliessend auf eine Trommel gewickelt wird, deren Achse im Wesentlichen parallel zur Achse der Windungen der herzustellenden Spule verläuft.

15. Verfahren nach einem der Ansprüche 12 bis 14, **dadurch gekennzeichnet, dass** beim Wickeln der Spule die Zugkraft der Wickeldrähte und/oder der Drahtkombination auf die herzustellende Spule gemäss vorgegebener Werte geregelt wird.

16. Verfahren nach einem der Ansprüche 12 bis 15, **dadurch gekennzeichnet, dass** die Wickeldrähte zu einer Drahtkombination, gegebenenfalls unter Einwirkung eines Lösungsmittels, zusammengefügt, insbesondere zusammengeklebt, werden.

## Claims

1. Multi-layered electromagnetic coil of a force-measuring system based on the principle of electromagnetic force compensation, comprising a multifilar, specifically bifilar wiring arrangement of coil wires, **characterized in that** the coil wires have a substantially rectangular cross-sectional profile.

2. Coil according to claim 1, **characterized in that** the cross-sectional profile of the coil wires has substantially a rounded rectangular shape whose shorter sides are formed in a biconvex shape and/or whose longer sides are flattened.

3. Coil according to claim 1 or 2, **characterized in that** the cross-sectional profile of the coil wires has a length-to width ratio of more than 1.2, in particular more than 1.5.

4. Coil according to one of the claims 1 to 3, **characterized in that** substantially each of the coil wires forms a layer of the coil that is complete in itself.

5. Coil according to one of the claims 1 to 4, **characterized in that** the coil wires are put together into a wire combination, in particular by arranging either the longer sides or the shorter sides of said rectangular cross-sectional profiles adjacent to each other.

6. Coil according to claim 5, **characterized in that** the coil wires are joined together into a wire combination, in particular by adhesive bonding.

7. Coil according to claim 5 or 6, **characterized in that** the cross-sectional profile of the wire combination has a substantially rectangular shape which is rounded and whose shorter sides are of biconvex or double biconvex shape and/or whose longer sides are flattened.

8. Coil according to one of the claims 5 to 7, **characterized in that** the cross-sectional profile of the wire combination has a length-to-width ratio of more than 1.2, in particular more than 1.5.

9. Coil according to one of the claims 5 to 8, **characterized in that** in a layer formed of the windings of the wire combination, in particular in each such layer, a first coil wire of the wire combination is always arranged closer to the center of the winding.

10. Coil according to one of the claims 5 to 7, **characterized in that** the wire combination comprises two coil wires and that alternating between layers the first coil wire and in the next layer the second coil wire is arranged closer to the center of the winding.

11. Coil according to one of the claims 1 to 10, **characterized in that** the coil is designed as an air coil, in particular of cylindrical shape and in particular with at least eight layers.

12. Method of manufacturing a coil according to one of the claims 1 to 11, **characterized in that** the coil wires and/or the wire combination are shaped under pressure and/or heat, possibly in a step that immediately precedes the winding operation.

13. Method according to claim 12, **characterized in that** the coil wires, which may be prefabricated in a rectangular shape, are spooled off from several drums whose axes are substantially parallel to the axis of the windings of the coil that is to be manufactured.

14. Method according to claim 12 or 13, **characterized in that** the coil wires are brought together into a wire combination and that said wire combination is next wound onto a drum whose axis is substantially parallel to the axis of the windings of the coil that is to be manufactured.

15. Method according to one of the claims 12 to 14, **characterized in that** in the process of winding the coil the tensile force exerted by the coil wires and/or by the wire combination on the coil that is to be manufactured is regulated according to specified values.

16. Method according to one of the claims 12 to 15, **characterized in that** the coil wires are joined into a wire combination, in particular by adhesive bonding, involving in some cases the action of a solvent.

## Revendications

1. Bobine électromagnétique à plusieurs couches d'un système de mesure de force basé sur le principe de la compensation de force électromagnétique, présentant un enroulement multifilaire, en particulier un enroulement bifilaire de fils d'enroulement, **caractérisée en ce que** les fils d'enroulement présentent une surface de section pratiquement rectangulaire.

2. Bobine selon la revendication 1, **caractérisée en ce que** la surface de section des fils d'enroulement présente une forme rectangulaire pratiquement arrondie, dont les côtés plus courts sont formés de façon biconvexe et/ou dont les côtés plus longs sont aplatis.

3. Bobine selon la revendication 1 ou 2, **caractérisée en ce que** la surface de section des fils d'enroulement présente un rapport longueur/largeur supérieur à 1.2, en particulier supérieur à 1.5.

4. Bobine selon l'une quelconque des revendications 1 à 3, **caractérisée en ce que** pratiquement chacun des fils d'enroulement forme une couche respectivement complète en soi de la bobine.

5. Bobine selon l'une quelconque des revendications 1 à 4, **caractérisée en ce que** les fils d'enroulement sont regroupés en une combinaison de fils, en particulier par l'agencement voisin des côtés plus longs ou plus courts de surface de section rectangulaire respectives.

6. Bobine selon la revendication 5, **caractérisée en ce que** les fils d'enroulement sont assemblés, en particulier collés ensemble pour former une combinaison de fils.

7. Bobine selon la revendication 5 ou 6, **caractérisée en ce que** la surface de section de la combinaison de fils présente une forme rectangulaire pratiquement arrondie, dont les côtés plus courts sont formés de façon biconvexe ou doublement biconvexe et/ou dont les côtés plus longs sont aplatis.

8. Bobine selon l'une quelconque des revendications 5 à 7, **caractérisée en ce que** la surface de section de la combinaison de fils présente un rapport longueur/largeur supérieur à 1.2, en particulier supérieur à 1.5.

9. Bobine selon l'une quelconque des revendications 5 à 8, **caractérisée en ce qu'**un premier fil d'enroulement de la combinaison de fils est disposé toujours plus près du centre de l'enroulement dans une couche, formée par les enroulements de la combinaison de fils, en particulier dans chacune de ces couches.

10. Bobine selon l'une quelconque des revendications 5 à 7, **caractérisée en ce que** la combinaison de fils présente deux fils d'enroulement et en alternance par couche le premier fil d'enroulement et dans la couche suivante le second fil d'enroulement sont disposés plus près du centre d'enroulement.

11. Bobine selon l'une quelconque des revendications 1 à 10, **caractérisée en ce que** la bobine est réalisée sous forme de bobine à air, en particulier dans une forme cylindrique et en particulier avec au moins huit couches.

12. Procédé pour la fabrication d'une bobine selon l'une quelconque des revendications 1 à 11, **caractérisé en ce que** les fils d'enroulement et/ou la combinaison de fils sont formés à chaque fois par pression et/ou réchauffement, éventuellement directement avant l'enroulement.

13. Procédé selon la revendication 12, **caractérisé en ce que** les fils d'enroulement, éventuellement préfabriqués avec une forme rectangulaire, sont déroulés de plusieurs tambours, dont les axes sont disposés sensiblement parallèlement à l'axe des spires de la bobine à fabriquer.

14. Procédé selon la revendication 12 ou 13, **caractérisé en ce que** les fils d'enroulement sont réunis en une combinaison de fils et **en ce que** cette combinaison de fils est enroulée ensuite sur un tambour dont l'axe s'étend sensiblement parallèlement à l'axe des spires de la bobine à fabriquer.

15. Procédé selon l'une quelconque des revendications 12 à 14, **caractérisé en ce que,** lors de l'enroulement de la bobine, la force de traction des fils d'enroulement et/ou de la combinaison de fils sur la bobine à fabriquer est réglée selon des valeurs prédéfinies.

16. Procédé selon l'une quelconque des revendications 12 à 15, **caractérisé en ce que** les fils d'enroulement sont assemblés, en particulier collés ensemble, pour former une combinaison de fils, éventuellement en faisant agir un solvant.
